# EUROPÄISCHE PATENTSCHRIFT

(11) **EP 0 841 561 B1**
(45) Veröffentlichungstag und Bekanntmachung des Hinweises auf die Patenterteilung: **28.02.2001**
(21) Anmeldenummer: 97117232.5
(22) Anmeldetag: 06.10.1997
(51) Int. Cl.: G01N 27/12, G01N 27/414

(54) **Verfahren zum Herstellen eines Sensors mit einer Metallelektrode in einer MOS-Anordnung**
Method for the production of a sensor with a metal electrode in a MOS device
Méthode pour la fabrication d'un capteur avec une électrode en métal dans un dispositif MOS

(30) Priorität: 10.10.1996 DE 19641777
(43) Veröffentlichungstag der Anmeldung: 13.05.1998
(73) Patentinhaber: Micronas GmbH, 79108 Freiburg (DE)
(72) Erfinder: Igel, Günter, Dipl.-Ing., 79331 Teningen (DE); Gahle, Günter, Dr.-Ing., 79312 Emmendingen (DE)

(56) Entgegenhaltungen:
- US-A- 4 209 796
- US-A- 4 936 956
- US-A- 5 393 401

## Beschreibung

Die Erfindung betrifft ein Verfahren zum Herstellen eines Sensors mit einer Metallelektrode in einer MOS-Anordnung.

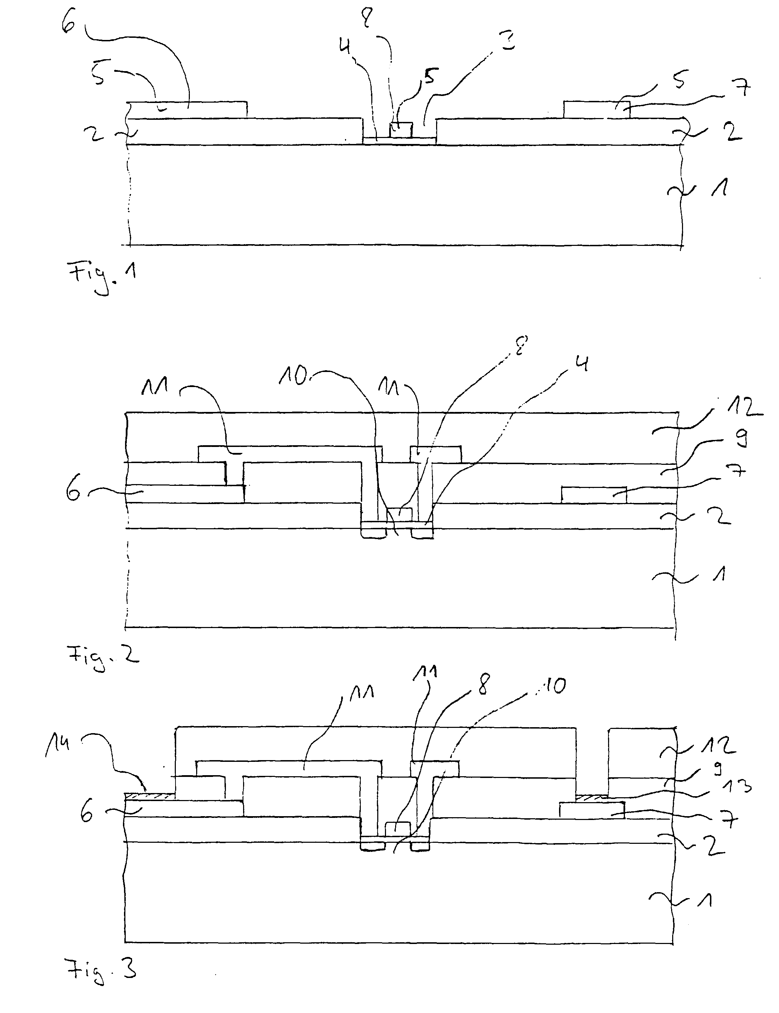

US-A-4 936 956 zeigt in der Fig. 2 ein übliches Verfahren zum Herstellen von Metallelektroden auf einer MOS-Anordnung.

Die Herstellung derartiger Sensoren scheitert in der Praxis daran, daß sich übliche Verfahren zur Herstellung einer Metallelektrode nicht mit dem üblichen MOS-Verfahren kombinieren lassen. Es müßten hierzu nach dem herkömmlichen MOS-Verfahren zur Herstellung der MOS-Anordnung zusätzliche Verfahrensschritte zum Aufbringen der Metallelektrode ausgeführt werden, die insbesondere Photolithographieprozesse, Ätzprozessse, und Lackablöseprozesse umfassen. Werden die Metallelektroden aus den dafür üblichen Materialien, nämlich aus Edelmetallen, z.B. aus Gold oder Platin hergestellt, so wird bei der Durchführung der dazu erforderlichen, oben genannten Verfahrensschritte, die MOS-Anordnung durch das Metall verunreinigt. Dadurch werden die Eigenschaften von Siliziumoxid, und bei MOS-Transistoren insbesondere die Eigenschaften des Gateoxids, und des darunterliegenden Kanals beeinträchtigt. Ferner werden die zum Durchführen der Verfahrensschritte verwendeten Vorrichtungen in der Halbleiterfabrik verunreinigt, was in der MOS-Fertigung nicht zulässig ist. Wird eine Metallelektrode aus einem unedlen Metall, wie Aluminium oder Titan aufgebracht, so verändern diese Metalle während ihrer Herstellung und bei Kontakt mit anderen Materialien ihre Eigenschaften. Als Folge ändern sich auch die Eigenschaften des Sensors. Bei der Verwendung von Platin als Metallelektrode ist ein Haftvermittler erforderlich, für welchen Titan verwendet wird. In diesem Fall treffen die oben beschriebenen ungünstigen Eigenschaften zusammen. Zudem wird das Verfahren aufgrund der zusätzlich durchzuführenden Verfahrensschritte zum Aufbringen der Metallelektrode aufwendig und teuer.

Der Erfindung liegt die Aufgabe zugrunde, ein wirtschaftlich rentables Verfahren zum Herstellen eines Sensors mit einer Metallelektrode in einer MOS-Anordnung zu schaffen, der zuverlässige Sensorsignale liefert.

Diese Aufgabe wird durch ein Verfahren zur Herstellung eines Sensors mit einer Metallelektrode in einer MOS-Anordnung gelöst, bei welchem die MOS-Anordnung mittels eines herkömmlichen MOS-Prozesses bis zur Ausbildung einer Passivierungsschicht hergestellt wird, wobei während des MOS-Prozesses ein Sensorbereich für den Sensor mit einer Struktur für die Metallelektrode erzeugt wird, wobei die Struktur aus einem Material mit vorbestimmten Hafteigenschaften für Metalle besteht, der Sensorbereich durch Ätzen der Passivierungsschicht sowie anderer zwischen dem Sensorbereich und der Passivierungsschicht liegender Schichten freigelegt wird, und eine Metallisierung der Oberfläche der MOS-Anordnung vorgenommen wird, bei der die Metallschicht nur auf der Struktur für die Metallelektrode haften bleibt.

Bei dem erfindungsgemäßen Verfahren wird die MOS-Anordnung mittels dem Fachmann bekannten Prozeßschritten bis zur Ausbildung der Passivierungsschicht, die zum Schutz der MOS-Anordnung dient, hergestellt. Während dieses Standard-MOS-Prozesses wird ein Sensorbereich für den Sensor mit einer Struktur für die Metallelektrode erzeugt. Der Sensorbereich und die Struktur können dabei aus Materialien gewählt werden, die für die MOS-Anordnung ohnehin erforderlich sind. Es sind keine zusätzlichen Masken zur Herstellung des Sensorbereichs und der Struktur erforderlich. Der Sensorbereich und die Struktur müssen lediglich bei der Herstellung von Masken, die ohnehin während des MOS-Prozesses verwendet werden, ausgebildet werden. Nachdem die MOS-Anordnung mit der Passivierungsschicht hergestellt worden ist, wird diese soweit geätzt, bis der Sensorbereich freiliegt. Wenn zwischen der Passivierungsschicht und dem Sensorbereich andere Schichten liegen, werden diese entsprechend geätzt. Auch dieser Ätzvorgang kann zusammen mit anderen Ätzprozessen, während des Verfahrens durchgeführt werden. Es ist auch hierzu keine zusätzliche Maske erforderlich, die nicht ohnehin zur Herstelllung der MOS-Anordnung verwendet wird. Zum Ausbilden der Metallelektrode wird die Struktur metallisiert. Hierzu wird ebenfalls keine Zusatzmaske benötigt, da ein Metallisierungsverfahren verwendet wird, bei dem die gesamte Oberfläche der MOS-Anordnung behandelt wird, das Metall aber nur auf der Struktur haften bleibt. Das Material der Struktur und das Metall werden mit entsprechenden Hafteigenschaften ausgewählt. Somit ist das erfindungsgemäße Verfahren einerseits sehr einfach, da zusätzliche Verfahrensschritte beim Herstellen der Metallelektrode eingespart werden können. Insbesondere wird es dadurch aber erst ermöglicht, die Herstellung einer Metallelektrode mit einem MOS-Verfahren zu kombinieren. Da zum Herstellen der Metallelektrode keine Photolitographieprozesse, Ätzprozesse oder Lackablöseprozesse erforderlich sind, kann die Metallelektrode aus Edelmetallen hergestellt werden, ohne daß die MOS-Anordnung oder die Vorrichtungen zur Durchführung des MOS-Verfahrens kontaminiert werden.

Gemäß einem ersten Ausführungsbeispiel der Erfindung erfolgt die Metallisierung durch galvanisches, insbesondere durch stromloses galvanisches Abscheiden eines Metalls. Das Material der Struktur und das Metall müssen dabei geeignet gewählt werden. Bei der stromlosen galvanischen Abscheidung des Metalls muß das abzuscheidende Metall edlere Materialeigenschaften haben als das Material der Struktur.

Gemäß einem zweiten Ausführungsbeispiel der Erfindung wird die Metallisierung durch Aufdampfen eines Metalls und durch darauffolgendes selektives, materialabhängiges Entfernen der Metallschicht mittels Ultraschall erzeugt. Bei geeigneter Wahl des Materials der Struktur, des die Struktur umgebenden Materials und des Metalls kann das aufgedampfte Metall außerhalb der Struktur aufgrund der Ultraschallbehandlung zuverlässig und einfach entfernt werden. Es sind hier keine die MOS-Anordnung ungünstig beeinflussenden Verfahrensschritte oder kostenaufwendige mit einer Maskierung verbundene Prozeßschritte erforderlich.

Es ist günstig, wenn zur Metallisierung ein Edelmetall, insbesondere Palladium verwendet wird. Ein selektives Haften des Palladiums auf der Sensorstruktur ist gewährleistet. Auch ist es vorteilhaft, wenn die Metallschicht vor dem selektiven Entfernen mit einem wasserstoffhaltigen Gas behandelt wird. Dann erfolgt die selektive Entfernung der Metallschicht zuverlässiger und schneller.

Vorteilhafterweise besteht der Sensorbereich aus Silizium, wobei der Bereich außerhalb der Struktur für die Metallelektrode mit einem Material bedeckt wird, das schlechtere Metallhafteigenschaften als das Silizium hat. Wenn man von einem Siliziumwafer ausgeht, sind aufgrund des Verfahrens zur Herstelllung einer MOS-Anordnung, die wenigstens einen MOS-Transistor aufweist, bereits Siliziumschichten vorhanden, die zur Ausbildung eines Sensorbereichs geeignet sind. Der Sensorbereich kann sowohl auf dem Substrat selbst, als auch auf einer anderen, während des MOS-Prozesses erzeugten Siliziumschicht ausgebildet werden. Er kann beispielsweise gleichzeitig mit dem Aufbringen von Polysilizium auf den Gatebereichen der MOS-Transistoren zur Gate-Elektrodenherstellung erfolgen. Ferner ist es günstig, wenn der Bereich außerhalb der Struktur für die Metallelektrode mit einem Oxid, insbesondere mit Siliziumoxid bedeckt wird, da die hierzu erforderlichen Verfahrensschritte bei der Herstellung einer MOS-Anordnung in einem Siliziumhalbleiter ohnehin durchgeführt werden.

Eine weitere Vereinfachung des Verfahrens wird dadurch erzielt, daß beim Ätzen der Passivierungsschicht und gegebenenfalls der anderen Schichten zum Freilegen der Sensorbereiche gleichzeitig Bereiche für Bondkontakte freigelegt werden. Zusätzliche Maskierungs- und Ätzschritte werden hierzu nicht benötigt. Die Bereiche für die Bondkontakte können aus Silizium bestehen und im gleichen Maskenschritt wie die Sensorbereiche gebildet werden. Hierdurch wird erreicht, daß kein Aluminium, welches üblicherweise zur Erzeugung von Leiterbahnen und zur Kontaktierung verwendet wird, aus dem Inneren des Halbleiters nach Außen geführt wird. Bei der Verwendung des Sensors als Biosensor oder als chemischer Sensor kann dann die gesamte MOS-Anordnung mit einer zu untersuchenden Flüssigkeit bedeckt werden, da dabei die Flüssigkeit nicht mit dem Aluminium in Kontakt kommen kann; denn Aluminium und Aluminiumlegierungen lösen sich in Flüssigkeiten und sind für lebende Organismen, wie Zellen, giftig. Bei diesem Ausführungsbeispiel treten keine prinzipiellen Änderungen in dem MOS-Herstellungsverfahren und in den Eigenschaften der MOS-Anordnung auf.

Gemäß einem anderen Ausführungsbeispiel der Erfindung können die elektrischen Leitungen der MOS-Anordnung aus Silizium gebildet werden. Hiermit kann eine dünnere MOS-Anordnung ausgebildet werden, da die Passivierungsschicht erheblich dünner gewählt werden kann als in dem Fall, in dem die elektrischen Leitungen aus Aluminium bestehen und eine dickere Passivierungsschicht zum Schutz benötigt wird. Zudem wird die Anordnung durch das Vermeiden der Aluminiumschicht und zusätzlicher, für diese benötigte Isolierschichten dünner. Durch die Vermeidung von Aluminium können während des Prozesses Verfahrensschritte bei höheren Temperaturen durchgeführt werden.

Im folgenden wird die Erfindung anhand der Zeichnung näher erläutert.

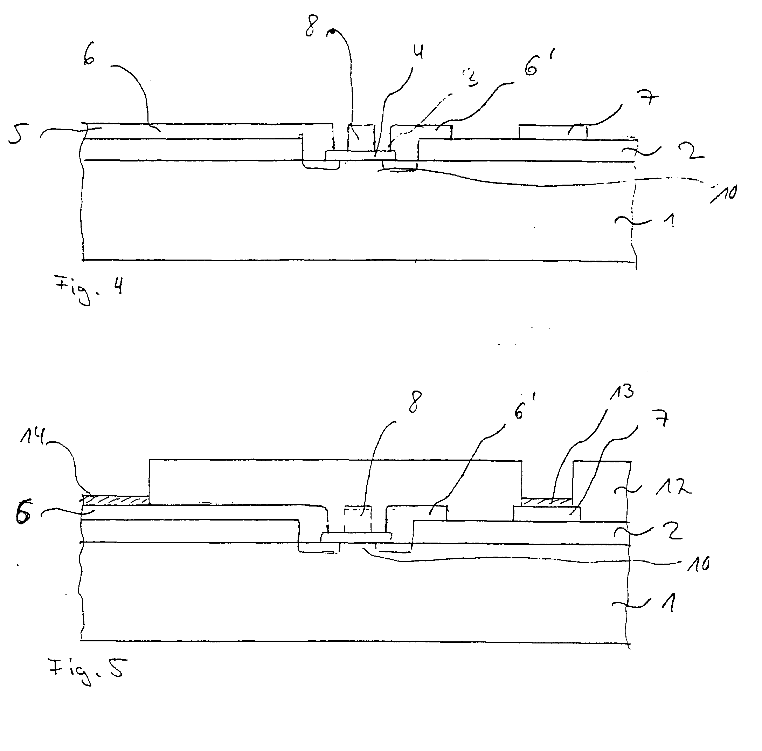

Fig. 1 bis 3 zeigen einen Querschnitt aus einem Ausführungsbeispiel einer MOS-Anordnung, die nach dem erfindungsgemäßen Verfahren hergestellt, nach unterschiedlichen Verfahrensschritten; und Fig. 4 und 5 zeigen ein zweites Ausführungsbeispiel eines nach dem erfindungsgemäßen Verfahren hergestellten Sensors nach verschiedenen Verfahrensschritten.

Figur 1 zeigt ein Halbleitersubstrat 1, auf das eine Feldoxidschicht 2 aufgebracht worden ist. Das Halbleitersubstrat 1 kann beispielsweise aus Silizium bestehen und die Feldoxidschicht 2 aus Siliziumdioxid. Die Feldoxidschicht 2 ist derart strukturiert, daß an der Stelle, an der ein MOS-Transistor vorgesehen werden soll, eine Öffnung 3 ausgebildet ist. In der Öffnung 3 ist eine Gateoxidschicht 4 aufgebracht, die wesentlich dünner als die Feldoxidschicht 2 ist. Auf der Feldoxidschicht 2 und der Gateoxidschicht 4 ist eine strukturierte Polysiliziumschicht 5 aufgebracht. Die Polysiliziumschicht 5 ist dabei so strukturiert, daß auf dem Gateoxidfilm 4 eine Gatelektrode und auf der Feldoxidschicht 2 eine Anschlußleitung 6 und ein Sensorbereich 7 ausgebildet sind. Der Sensorbereich 7 weist eine Struktur für die darauf zu erzeugende Metallelektrode auf. Im gezeigten Ausführungsbeispiel dient er zur Aufnahme einer flächigen Metallelektrode. Das Silizium des Sensorbereichs 7 kann aber auch eine räumlich andere Struktur, beispielsweise eine Kammstruktur zur Ausbildung eines Interdigitalkondensators aufweisen. Hierzu kann das Silizium des Sensorbereichs 7 so strukturiert werden, daß das Silizium an den Stellen, die nicht mit der Metallelektrode bedeckt werden sollen, soweit entfernt ist, daß die Feldoxidschicht 2 an diesen Stellen freigelegt ist.

Die Verfahrenschritte, die notwendig sind, um die bis hierher beschriebene Anordnung zu erzeugen, entsprechen herkömmlichen MOS-Verfahrensschritten. Die zur Ausführung erforderlichen Einzelheiten sind dem Fachmann bekannt. Bei der Herstellung der Anordnung, insbesondere des MOS-Transistors, muß darauf geachtet werden, daß gleichzeitig der Sensorbereich 7 definiert wird. In dem gezeigten Ausführungsbeispiel wird dieser gleichzeitig mit dem Herstellen der Siliziumgateelektrode 8 und der Anschlußleitung 6 für die elektrischen Kontakte erzeugt.

Wie in Figur 2 gezeigt ist, wird danach eine Isolierschicht 9 aufgebracht, in welcher oberhalb der Stellen für die Anschlußkontakte, insbesondere oberhalb des MOS-Transistors 10 und der Anschlußleitung 6, Öffnungen ausgebildet werden. Auf die Isolierschicht 9 wird eine Leiterschicht 11 derart aufgebracht, daß die Öffnungen in der Isolierschicht 9 zur Herstellung der elektrischen Kontakte mit dem Material der Leiterschicht 11 ausgefüllt werden. Danach wird die gesamte MOS-Anordnung mit einer Schutzschicht 12 überdeckt. Die Leiterschicht 11 besteht in der Regel aus Aluminium.

In die Passivierungsschicht 12 und in die Isolierschicht 9 werden Öffnungen geätzt. Dadurch wird der Sensorbereich 7 dort, wo eine Metallelektrode 13 aufgebracht werden soll, freigelegt. Gleichzeitig werden Bereiche der Anschlußleitung 6 zum Herstellen von Bondkontakten freigelegt. Danach wird die Oberfläche der MOS-Anordnung so metallisiert, daß die Metallschicht nur auf der Struktur des Sensorbereichs für die Metallelektrode und auf den freigelegten Bereichen der Anschlußleitung 6 für die Bondpads haften bleibt. Dadurch entstehen die in Figur 3 gezeigte Metallelektrode 13 und das Bondpad 14.

Die Ausbildung der Metallelektrode 13 und der Bondpads 14 entsteht dadurch, daß die Struktur des Sensorbereichs 7 für die Metallelektrode 13 und der Bereich für die Bondpads 14 aus einem Material gebildet sind, an dem das Metall gut haften bleibt, wohingegen die Passivierungsschicht 12 und die Isolierschicht 9 aus einem Material gebildet sind, an dem das Material für die Metallelektrode 13 und die Bondpads 14 schlechter haftet. Geeignete Materialien sind Polysilizium für die Anschlußleitung 6 und den Sensorbereich 7, Palladium für die Metallelektrode 13 und die Bondpads 14, Siliziumoxid für die Isolierschicht 9 und Siliziumnitrid und/oder Siliziumoxid für die Passivierungsschicht 12.

Die selektive Metallisierung kann gemäß einem Ausführungsbeispiel der Erfindung durch galvanisches, insbesondere durch stromloses galvanisches Abscheiden des Metalls erfolgen. Dabei ist darauf zu achten, daß das abzuscheidende Metall ein edleres Material als das der Unterlage ist, wie dies bei der oben beschriebenen Materialauswahl der Fall ist.

Gemäß einem zweiten Ausführungsbeispiel der Erfindung wird das Metall auf die gesamte Oberfläche der MOS-Anordnung mit der strukturierten Passivierungsschicht 12 aufgedampft. Danach muß die so erzeugte Metallschicht selektiv entfernt werden. Dies erfolgt dadurch, daß die MOS-Anordnung einer Ultraschallbehandlung ausgesetzt wird, bei der sich die Metallschicht von der Passivierungsschicht 12 und von der Isolierschicht 9 löst. Vor der Ultraschallbehandlung kann die MOS-Anordnung mit einem wasserstoffhaltigen Gas behandelt werden. Da die Metallschicht, wenn sie aus Palladium besteht, Wasserstoff aufnimmt, führt dies zu einem leichteren Lösen der Metallschicht von der Passivierungsschicht 12. Die Hafteigenschaften von Silizium und Palladium sind derart, daß die Palladiumschicht auch während einer Ultraschallbehandlung auf dem Silizium haften bleibt. In dem in der Fig. 3 gezeigten Ausführungsbeispiel besteht die Struktur des Sensorbereichs aus einem flächigen inneren Teilbereich des Sensorbereichs 7, auf dem eine flächige Metallelektrode 13 haften bleibt. Es sind auch andere Strukturen, insbesondere interdigitale Kondensatorstrukturen, mit dem gleichen Verfahren erzeugbar.

Anhand von Fig. 4 und Fig. 5 wird die Herstellung eines anderen Ausführungsbeispiels einer MOS-Anordnung nach dem erfindungsgemäßen Verfahren gezeigt. Soweit es im folgenden nicht anders beschrieben wird, wird diese Anordnung nach dem in Zusammenhang mit den Figuren 1 bis 3 beschriebenen Verfahren hergestellt. Fig. 4 zeigt die Anordnung, nachdem auf dem Halbleitersubstrat 1 die Feldoxidschicht 2 mit der Öffnung 3 aufgebracht. Zur Ausbildung eines MOS-Transistors in der Öffnung 3 ist dort eine Gateoxidschicht 4 aufgebracht, die in diesem Ausführungsbeispiel so strukturiert ist, daß zwischen der Feldoxidschicht 2 und der Gateoxidschicht 4 Kontaktöffnungen vorgesehen sind, die die Oberfläche des Halbleitersubstrats freilegen. Hierdurch wird eine direkter Kontaktierung des in dem Halbleitersubstrat 1 ausgebildeten MOS-Transistors 10 mit der dann auf die Feldoxidschicht 2 aufgebrachten Polysiliziumschicht 5 ermöglicht.Die Polysiliziumschicht 5 wird in dem hier gezeigten Ausführungsbeispiel so strukturiert, daß der Sensorbereich 7, die Gateelektrode 8 und zusätzlich Anschlußleitungen 6, 6' entstehen. Die Anschlußleitungen 6, 6' können sowohl zur Kontaktierung des MOS-Transistors 10 als auch zur Ausbildung des Bondpads 14 verwendet werden.

Fig. 5 zeigt diese Anordnung, nachdem die Passivierungsschicht 12 mit Öffnungen für die Struktur des Sensorbereichs 7 und Anschlußbereiche für Bondpads 14 ausgebildet ist, und in den Öffnungen selektiv eine Metallschicht auf die freigelegten Siliziumbereiche, d. h. auf die Struktur des Sensorbereichs 7 und auf die Bereiche für die Bondpads 14, mit einem der oben beschriebenen Verfahren aufgebracht worden ist. Es werden hier zur elektrischen Leitung Siliziumleitungen verwendet. Dadurch wird das Aufbringen von zusätzlichen Aluminiumleitungen und dazwischen liegenden Isolierschichten vermieden, so daß das Verfahren einfacher wird, und eine dünnere MOS-Anordnung erzielt werden kann. Zudem ist die Anordnung, da Aluminium vermieden wird, gegenüber Behandlungen bei hohen Temperaturen beständig, so daß bei ihrer Herstellung Hochtemperaturprozesse durchgeführt werden können. Gegenüber einer herkömmlichen MOS-Anordnung mit Aluminiumleitungen müssen hier die anderen elektrischen Eigenschaften aufgrund des höheren elektrischen Widerstands der Anschlußleitungen berücksichtigt werden.

## Patentansprüche

1. Verfahren zum Herstellen eines Sensors mit einer Metallelektrode in einer MOS-Anordnung, bei welchem die MOS-Anordnung mittels eines herkömmlichen MOS-Prozesses bis zur Ausbildung einer Passivierungsschicht hergestellt wird, wobei während des MOS-Prozesses ein Sensorbereich (7) für den Sensor mit einer Struktur für die Metallelektrode (13) erzeugt wird, wobei die Struktur aus einem Material mit vorbestimmten Hafteigenschaften für Metalle besteht, der Sensorbereich (7) durch Ätzen der Passivierungsschicht (12) sowie anderer zwischen dem Sensorbereich (7) und der Passivierungsschicht (12) liegender Schichten (9) freigelegt wird, und eine Metallisierung der Oberfläche der MOS-Anordnung vorgenommen wird, bei der die Metallschicht nur auf der Struktur für die Metallelektrode (13) haften bleibt.

2. Verfahren nach Anspruch 1, dadurch gekennzeichnet, daß die Metallisierung durch galvanisches, insbesondere durch stromloses galvanisches Abscheiden eines Metalls erfolgt.

3. Verfahren nach Anspruch 1, dadurch gekennzeichnet, daß die Metallisierung durch Aufdampfen eines Metalls und durch darauffolgendes selektives, materialabhängiges Entfernen der Metallschicht mittels Ultraschall erfolgt.

4. Verfahren nach einem der vorangehenden Ansprüche, dadurch gekennzeichnet, daß zur Metallisierung ein Edelmetall, insbesondere Palladium, verwendet wird.

5. Verfahren nach Anspruch 4, dadurch gekennzeichnet, daß die Metallschicht vor dem selektiven Entfernen mit einem wasserstoffhaltigen Gas behandelt wird.

6. Verfahren anch einem der vorangehenden Ansprüche, dadurch gekennzeichnet, daß der Sensorbereich (7) aus Silizium besteht, wobei der Bereich außerhalb der Struktur für die Metallelektrode (13) mit einem Material bedeckt wird, das schlechtere Metallhafteigenschaften als das Silizium hat.

7. Verfahren nach einem der vorangehenden Ansprüche, dadurch gekennzeichnet, daß der Bereich außerhalb der Struktur für die Metallelektrode (13) mit einem Oxid, insbesondere Silliziumoxid bedeckt wird.

8. Verfahren nach einem der vorangehenden Ansprüche, dadurch gekennzeichnet, daß bei dem Ätzen der Passivierungsschicht zum Freilegen der Sensorbereiche (7) gleichzeitig Bereiche für Bondkontakte freigelegt werden.

9. Verfahren nach einem der vorangehenden Ansprüche, dadurch gekennzeichnet, daß die Bereiche für die Bondkontakte (14) aus Polysilizium bestehen und im gleichen Maskenschritt wie die Sensorbereiche (7) gebildet werden.

10. Verfahren nach einem der vorangehenden Ansprüche, dadurch gekennzeichnet, daß die elektrischen Leitungen (6) der MOS-Anordnung aus Polysilizium gebildet sind.

## Claims

1. A process for manufacturing a sensor with a metal electrode in an MOS structure wherein the MOS structure is fabricated with a conventional MOS process, a sensing region (7) with a structure for the metal electrode (13) being formed during the MOS process, the structure for the metal electrode (13) being made of a material having predetermined adhesion properties for metals, the sensing region (7) being uncovered by etching the passivating layer (12) and any layers (9) provided between the sensing region (7) and the passivating layer (12), and a metallization of the surface of the MOS structure being carried out in which the metal layer adheres only to the structure for the metal electrode (13).

2. A process as claimed in claim 1, characterized in that the metallization is done by plating, particularly by electroless plating.

3. A process as claimed in claim 1, characterized in that the metallization is done by vapor deposition of a metal and subsequent selective, material-dependent removal of the metal layer using ultrasonic energy.

4. A process as claimed in any one of the preceding claims, characterized in that for the metallization, a noble metal, particularly palladium, is used.

5. A process as claimed in claim 4, characterized in that prior to its selective removal, the metal layer is treated with a hydrogen-containing gas.

6. A process as claimed in any one of the preceding claims, characterized in that the sensing region (7) is made of silicon, with the area outside the structure for the metal electrode (13) being covered with a material which adheres to metal less well than the silicon.

7. A process as claimed in any one of the preceding claims, characterized in that the area outside the structure for the metal electrode (13) is covered with an oxide, particularly silicon oxide.

8. A process as claimed in any one of the preceding claims, characterized in that during the etching of the passivating layer for uncovering the sensing regions (7), regions for bonding pads are uncovered.

9. A process as claimed in any one of the preceding claims, characterized in that the regions for the bonding pads (14) are made of polysilicon and are formed in the same masking step as the sensing regions (7).

10. A process as claimed in any one of the preceding claims, characterized in that the electric interconnections (6) of the MOS structure are formed of polysilicon.

## Revendications

1. Procédé pour la fabrication d'un capteur comportant une électrode en métal dans un dispositif de type MOS, dans lequel le dispositif de type MOS est fabriqué au moyen d'un processus MOS usuel jusqu'à la formation d'une couche de passivation, dans lequel, pendant le processus MOS, on réalise une zone de capteur (7) pour le capteur qui présente une structure destinée à l'électrode en métal (13), dans lequel ladite structure est constituée d'une matière qui présente des propriétés d'adhérence prédéterminées pour les métaux, dans lequel la zone de capteur (7) est mise à nu par attaque de la couche de passivation (12) ainsi que d'autres couches (9) se trouvant entre la zone de capteur (7) et la couche de passivation (12) et dans lequel on procède à une métallisation de la surface du dispositif de type MOS lors de laquelle la couche de métal reste accrochée seulement sur la structure destinée à l'électrode en métal (13).

2. Procédé selon la revendication 1, caractérisé en ce que la métallisation est réalisée par la séparation galvanique, en particulier galvanique sans courant, d'un métal.

3. Procédé selon la revendication 1, caractérisé en ce que la métallisation est réalisée par la vaporisation d'un métal et par la suppression consécutive de la couche de métal au moyen d'ultrasons, ladite suppression étant sélective et déterminée en fonction de la matière.

4. Procédé selon l'une quelconque des revendications précédentes, caractérisé en ce que, pour la métallisation, on utilise un métal noble, en particulier du palladium.

5. Procédé selon la revendication 4, caractérisé en ce que, avant la suppression sélective, la couche de métal est traitée au moyen d'un gaz contenant de l'hydrogène.

6. Procédé selon l'une quelconque des revendications précédentes, caractérisé en ce que la zone de capteur (7) est constituée de silicium, en ce que la zone disposée à l'extérieur de la structure destinée à l'électrode en métal (13) est recouverte par une matière qui présente des propriétés d'adhésion aux métaux qui sont plus mauvaises que celles du silicium.

7. Procédé selon l'une quelconque des revendications précédentes, caractérisé en ce que la zone disposée à l'extérieur de la structure destinée à l'électrode en métal (13) est recouverte avec un oxyde, en particulier avec de l'oxyde de silicium.

8. Procédé selon l'une quelconque des revendications précédentes, caractérisé en ce que, lors de l'attaque sélective de la couche de passivation pour la mise à nu des zones de capteur (7), des zones destinées à des contacts de connexion sont mises à nu en même temps.

9. Procédé selon l'une quelconque des revendications précédentes, caractérisé en ce que les zones destinées aux contacts de connexion (14) sont constituées de silicium polycristallin et sont formées pendant la même étape de fabrication de masques que les zones de capteur (7).

10. Procédé selon l'une quelconque des revendications précédentes, caractérisé en ce que les conducteurs électriques du dispositif de type MOS sont réalisées en silicium polycristallin.
